# EUROPEAN PATENT SPECIFICATION

(11) **EP 3 573 885 B1**
(45) Date of publication and mention of the grant of the patent: **24.02.2021**
(21) Application number: 18702805.5
(22) Date of filing: 12.01.2018
(51) Int. Cl.: B62K 5/02, B62K 5/10, B60B 9/12

(54) **RIDE-ON VEHICLE**
AUFSITZFAHRZEUG
VÉHICULE A CONDUITE ASSISE

(30) Priority: 24.01.2017 IT 201700007544
(43) Date of publication of application: 04.12.2019
(73) Proprietor: Interactive Fully Electrical Vehicles S.r.l., 10040 La Loggia (Torino) (IT)
(72) Inventor: PERLO, Pietro, I-10040 La Loggia (Torino) (IT); PENSERINI, Davide, I-10040 La Loggia (Torino) (IT); SABATO, Gioele, I-10040 La Loggia (Torino) (IT); IUZZOLINO, Gregorio, I-10040 La Loggia (Torino) (IT); BIASIOTTO, Marco, I-10040 La Loggia (Torino) (IT); POZZATO, Sergio, I-10040 La Loggia (Torino) (IT); GROSSO, Marco, I-10040 La Loggia (Torino) (IT)
(74) Representative: Notaro, Giancarlo
(86) International application number: PCT/IB2018/050196
(87) International publication number: WO 2018/138594

(56) References cited:
- WO-A1-2006/002590
- US-A- 1 432 540
- US-A1- 2007 205 576
- US-A1- 2012 104 722
- US-B1- 8 382 135
- US-B1- 9 193 415

## Description

### Field of the invention

The present invention relates, in general, to vehicles of the ride-on type, including bicycles of the conventional type with pedal-only propulsion, bicycles with an electric motor, both of the pedal-assisted type, and of the purely electric type, mopeds, scooters and motorcycles in general.

Specifically, the invention relates to a ride-on vehicle of the type comprising a frame, a rear wheel assembly supported by a frame and a front wheel assembly supported by a steering assembly associated with the frame, in which the rear wheel assembly includes two side-by-side rear wheels.

### Prior art

Pedal vehicles of the type indicated above have been previously proposed, and used in the form of tricycle vehicles that are not laterally tiltable, thereby having the advantage of ensuring a stable upright static position of the vehicle without the need for a stand while however hindering lateral tilting of the vehicle when it travels around a bend, which means these tricycle vehicles cannot be considered similar in use to a bicycle or a motorcycle, and they are not able to reproduce the same sensation of riding a bicycle or a motorcycle for the user. In these tricycle vehicles, the two rear wheels rotate independently of each other, to allow different rotation speeds of the two wheels when the vehicle turns a bend.

The document US8382135 is considered the closest prior art and discloses a ride-on vehicle with three wheels. The two rear wheels are spaced apart and they are equipped with elastic tyres.

### Object of the invention

The object of the present invention is that of producing a vehicle of the type indicated above that, in static conditions, guarantees a stable upright static position of the vehicle, without the necessity of using a stand, but that, nevertheless, can be completely assimilated in the use to a bicycle or a moped, or a scooter or a motorcycle, in general, and that reproduces the same driving sensation of this type of vehicle, allowing lateral tilting of the vehicle on a bend.

Another object of the invention is to achieve the aforesaid objective with an extremely simple structure, and characterized by a series of important additional advantages, including:
- the possibility of using wheels without inflatable tires (which makes it possible, for example, to considerably simplify the maintenance of bicycle parks used in "bike-sharing" services),
- the possibility of obtaining an elastic suspension of the vehicle integrated into the wheel structure, thereby increasing the driving comfort,
- the possibility of arranging the vehicle transmission chain, and the gears associated therewith, substantially in the longitudinal median plane of the vehicle, so as to eliminate the risk of interference with the user's legs and also to ensure that the forces due to the propulsive thrust are transmitted to the wheels in the most optimal and efficient way, without the transverse components that are generated in conventional cycles and motorcycles, due to the misaligned arrangement of the chain transmission with respect to the longitudinal median plane,
- the possibility of increasing the driving safety on slippery ground (water and ice), as well as increasing safety during braking.

Another preferred object of the invention is that of producing a vehicle of the type indicated above in which it is possible to vary the elastic response of the suspension and/or the behavior and maneuverability around bends, and to optimize in an auto-adaptive way or through a control member, for example, in the form of a knob, the performance of the vehicle - while driving - in relation to instantaneous use, for example, greater comfort or greater rigidity so that the propulsive thrust is more directly transmitted to the road.

Another preferred object of the invention is that of distributing the rolling resistance on two wheels, whose overall impression on the ground is less than or equal to that of the tire usually used in mopeds, scooters or motorcycles in general.

Another object of the invention is to produce a vehicle of the type specified above using materials that enhance the characteristics that have been mentioned above.

Finally, an object of the invention is to achieve all the aforesaid objectives with an extremely simple and economical construction structure and assembly, having a relatively low weight, and also characterized by a low rolling resistance.

### Summary of the invention

In view of achieving one or more of the aforementioned objects, the invention relates to a ride-on vehicle, comprising a frame, a rear wheel assembly carried by a frame, and a front wheel assembly carried by a steering assembly associated with the frame, whereby:
- the rear wheel assembly includes two side-by-side rear wheels having substantially equal diameters and respective hubs rotatably coupled together,
- each rear wheel comprises a peripheral circumferential portion for contact with the ground, connected to a central wheel hub by means of one or more corrugated elastic elements configured to elastically deform in a radial direction, during use of the vehicle, at the portion of the wheel comprised between the wheel hub and the part of the wheel that is in contact with the ground, so as to allow lateral tilting of the vehicle at a bend,
- the two rear wheels are axially spaced apart from each other by a length that is 0.2 to 0.95 times their diameter, preferably between 0.3 and 0.4 times their diameter, in such a way that the vehicle has a stable upright static position, thanks to the support on the two rear wheels and the front wheel assembly, while at the same time, the two rear wheels are close enough so that the difference in their peripheral speeds at a bend is small enough to be compensated by the different elastic deformations of the corrugated elastic elements of the two rear wheels.

In a first embodiment, each rear wheel (30) comprises a wheel disc (303), which connects the wheel hub (301) to said peripheral circumferential portion (306) for contact with the ground, and characterized in that the wheel disc (303) of each rear wheel (30) comprises one or more concentric circumferential portions (305) each having a corrugated configuration, so as to constitute said one or more elastic elements configured to elastically deform in the radial direction, during use of the vehicle, at the portion of the wheel disc (303) comprised between the wheel hub (301) and the part of the wheel that is in contact with the ground, so as to allow lateral tilting of the vehicle at a bend.

The elastic elements, elastically deformable in the radial direction of each rear wheel, fulfill a dual function. On one hand, they provide an elastic suspension of the vehicle similar to that of a conventional tire, which absorbs the irregularities of the road even when driving straight-on, and on the other hand, they allow lateral tilting of the vehicle at a bend, and allow the two rear wheels to have different peripheral speeds in these conditions, even though they are coupled in rotation with each other, thanks to the different variation of the distance between the hub of each wheel and the part of the wheels in contact with the ground.

The effect of the elastic suspension thus produced therefore allows, if required, the provision of a peripheral circumferential portion in contact with the ground, with no inflatable tire.

In a second embodiment, each rear wheel comprises a plurality of elastically deformable radial portions that connect the wheel hub to said peripheral circumferential portion of the wheel, which are defined by a plurality of notches formed in a wheel disc. The wheel disc is shaped in such a way that each radial portion has a corrugated conformation, with a part thereof closer to the periphery of the wheel that is concave towards one side of the wheel, and a part thereof closer to the wheel hub that is concave towards the opposite side of the wheel.

In a third embodiment, said elastically deformable radial portions of each rear wheel are defined by at least one band, shaped in such a way as to define a plurality of radial lobes, each comprising two facing walls, contained in planes parallel to the axis of the wheel, diverging in a radial direction outwards, and connected to each other at the periphery of the wheel by a curved portion of said band.

In all the aforesaid embodiments, preferably the shaft of said rear wheel assembly carries one or more pinions, in selective engagement with a transmission chain of the vehicle, which are arranged between the two rear wheels of the vehicle. Preferably, moreover, the crankset of the vehicle includes one or more crown gears for engaging the vehicle transmission chain, which are substantially centered on the longitudinal median plane of the vehicle, and substantially aligned with the aforesaid one or more pinions arranged between its rear wheels.

Thanks to these characteristics, the vehicle chain transmission system is arranged in a protected area, between the two rear wheels, away from the risk of interference with the user's legs. Furthermore, thanks to these characteristics both on the pedal side and on the wheel side, the transmission has no transversal components that limit the efficiency of the thrust, be it muscular or electric.

Still preferably, the material constituting each rear wheel is a material selected from high-strength steel (preferably Dual Phase steel having a value of 1500DP or higher) and a composite material including a synthetic resin matrix reinforced with fibers. The use of these materials allows the required characteristics to be imparted to the wheel, which include the capacity of the elastically deformable portions to provide the required elastic response and, on the other hand, the necessary characteristics of structural strength and dynamic stability of the wheel disc during travel. In one variant, each rear wheel has a multilayer wall, including a plurality of layers each made of high-strength steel or a composite material. The characteristics of elasticity of the wheel along the radius can be modulated through a variable thickness, either progressive or localized along the radius, varying the frequency and/or amplitude of the corrugated parts or varying the type of material along the radius of the disc.

In the first embodiment, the wheel disc of each rear wheel comprises one single-layer or multi-layer wall, including the aforesaid corrugated portions. This distinguishes the structure of the rear wheels of the vehicle according to this embodiment with respect to known wheel structures with corrugated walls proposed in the field of motor-vehicles (see, for example, US 1432540 A, wherein the wheel disc has two mutually spaced-apart walls, each having corrugated circumferential portions).

According to another characteristic of the first embodiment, the disc of each rear wheel is provided with a device for adjusting the configuration and/or flexibility of said corrugated portions of the wheel disc. According to a first solution, this device comprises one or more rings of elastomeric material, applicable on one or both faces of one or more of said corrugated circumferential portions of the wheel disc, each ring of elastomeric material including one or more circumferential ribs that can be coupled within respective annular recesses defined by said corrugated portions. A user can glue or screw on one or more elastomeric rings in order to regulate the suspension effect, favoring comfort or speed in relation to their driving preferences. In a second embodiment, said adjustment device comprises one or more wires with adjustable length, each wound around a respective corrugated portion of said wheel disc. The aforesaid adjustable-length wires are flexible wires wound in a ring and having mutually coupled ends in a manually-adjustable position, for example, by means of a screw-on tie-rod, or an electric actuator powered by an electric battery (e.g. co-laminated or, in any case, integrated into the disc or by means of an electrical connection passing through the wheel hub), or are wires having at least one shape-memory portion acting as an electrically-operated actuator. Adjustment of the stiffness and elasticity of the wheel disc can be carried out by means of a knob placed on the handlebars, either by cable or wirelessly. The discs can also be adjusted with different rigidity in real-time, to maximize grip on the road in the presence of tight bends or curves on wet or icy roads.

As is evident from the above description, the vehicle according to the invention allows a series of important advantages to be obtained.

Firstly, the configuration of the rear wheel assembly with two side-by-side rear wheels gives the vehicle the possibility of having a stable, upright static position, without the need for a stand. In this way, the possibility of falls from the vehicle at rest or at low speed, which can often cause breakage of the user's wrist, elbow or pelvis, in particular in the case of elderly users, are reduced or eliminated altogether.

At the same time, the configuration of each rear wheel with the aforesaid elastically deformable elements allows the vehicle to tilt sideways when traveling around a bend, which gives the user the driving sensation of a conventional bicycle. At the same time, the elastic elements of the two rear wheels compensate the different peripheral speeds of the two wheels when the vehicle travels around a bend, if no differential is provided and the two rear wheels are rigidly coupled in rotation with each other, thus giving rise to an integrated rear wheel assembly, which is simple and economic to construct.

At the same time, the grip on slippery surfaces (water and ice) is increased, especially around bends. The sliding phenomenon due to so-called "aquaplaning" is, therefore, reduced.

The safety of the vehicle during braking is also increased, as the risk of sliding of the wheels with respect to the ground during braking is greatly reduced.

The provision of the transmission chain and the pinions associated therewith in the longitudinal median plane of the vehicle, in the space between the rear wheels, gives rise to further safety advantages against the interference of foreign bodies (in particular the user's legs) with the chain.

The configuration of the two rear wheels with the aforesaid elastic elements gives the vehicle an elastic suspension, which also allows wheels to be provided without inflatable tires. This aspect is greatly advantageous, for example, in maintaining bicycle fleets for "bike sharing" services, where bicycles are often out-of-use because they have deflated tires.

To this end, for example, in the first embodiment, it is possible, in particular, to provide a more external corrugated circumferential portion with greater elasticity, by means of greater frequency and greater amplitude of the corrugations, to perform the function of the inflatable tire, and an inner corrugated circumferential portion with greater thickness or with less frequency to fulfill the elastic suspension function. All the aforesaid advantages are enhanced by the use of the materials provided in the preferred embodiments of the invention, in particular high-strength and highly-elastic steel (preferably 1500DP or higher Dual Phase steels) and synthetic composite materials, possibly with variable thickness, made by hot- or cold-molding or laminated with laser-applied finishes.

In order to reduce the lateral surface and, therefore, the lateral thrust of the wind, the wheel discs can be provided with holes also having an aesthetic function. Finally, the rear or front wheel discs can be covered with a co-laminated or co-molded photovoltaic surface, configured to supply the actuation of the regulating actuator of the rigidity of the disc or to supply the energy storage system, either electromechanical or electrochemical of capacitor-type or battery-type.

The central position of the chain facilitates insertion of a front electric motor between the two pedals, which, in the pedal-assisted configuration can, in fact, be connected to the crankshaft. In the purely electric mode, the motor can be placed on the frame at the rear at the bottom, leaving space for placing the feet on the base that integrates the batteries.

In another configuration in the electric propulsion mode of the type corresponding to the so-called "L" category (bike or scooter), the electric motor is placed between the two rear wheels, the stator is rigidly connected to the tubes of the frame placed between the two wheels while the crankshaft is directly connected to the wheels in the "direct drive" mode.

Both in the purely electric drive mode and in the pedal-assisted drive mode, the known methods of energy recovery are applied during decelerations, descents and braking.

Finally, a device for adjusting the configuration and/or flexibility of the aforesaid elastically deformable portions of the rear wheels can be provided. It is thus possible for the manufacturer to easily arrange vehicles having different performance characteristics for different market segments, and it is also possible for the user to adapt his vehicle to different uses.

In another variant, the vehicle according to the invention is also characterized in that it is provided with a stand configured to keep the front wheel assembly spaced apart from the ground, in that said front wheel assembly is shaped so as to be able to act as a wind rotor, and in that said front wheel assembly has a hub connected to an electric generator, usable for charging a battery that the vehicle is provided with.

In another variant, the peripheral circumferential portion of each rear wheel comprises a tire filled with expanded plastic material, said tire being preferably internally lined with a lubricating fluid, to facilitate filling with said expanded plastic material.

According to another characteristic, the vehicle is equipped with a miniaturized multisensory electronic platform, for example, a platform measuring 40 mm x 40 mm x 2 mm, comprising one or more components selected from:
- one or more micro-cameras,
- an inertial platform,
- two accelerometers that can also be used as inclinometers,
- sensor arrays for directional speech recognition,
- side, front and rear proximity sensors,
- a processor,
- a system for internet connectivity by means of purely interactive or voice navigation,
- a wireless and/or wired system for interface with a smartphone and with the ride-on vehicle powertrain,
said platform being configured to be used in one or more of the following ways:
1) as an anti-theft system configured to inhibit the use of the vehicle and/or disable the functions of an electronic controller of the vehicle, said anti-theft device being unlockable by means of a speech and/or facial recognition system, and being configured to send the image of a stranger who attempts to use the vehicle to a proprietary digital device that decides whether or not to authorize use of the vehicle;
2) as a vehicle-vehicle or vehicle infrastructure connection system or, more generally, connection system of a vehicle to another device provided with communication;
3) as a system for controlling assisted braking, based on the use of one or two cameras configured to recognize an obstacle on the road, a hole on the road, or more generally, a dangerous situation, the system being configured to process the signal for recognizing the danger in an on-board processor and then sending the processed signal to the motor control system or directly to the vehicle's braking system;
4) for interfacing a camera that frames the scene surrounding the vehicle and an internet tracking system in order to provide the driver of the vehicle with information about the place or buildings on the road traveled;
5) as a system of measuring the tilting of the vehicle in the event of heavy braking or on slippery-icy roads, capable of triggering a combined action between the two rear wheels and the front wheel, in order to counteract the force that tends to overturn the vehicle;
6) as a system for optimizing energy recovery in the event of braking or releasing the acceleration system, according to known methods in four-wheel vehicles;
7) as a means of interface between a smartphone and the powertrain control system of the vehicle, in particular for charging, by means of an external charger, for managing the battery pack, for managing either portable photovoltaic panels or those integrated in surfaces of the vehicle;
8) to control proximity sensors that warn the driver both acoustically and on the smartphone screen when another vehicle approaches at a critical distance, either laterally or from behind.

### Detailed description of preferred embodiments

Further characteristics and advantages of the present invention will become apparent from the description that follows with reference to the attached drawings, provided purely by way of non-limiting example, wherein:
- Figure 1 is a perspective view of a first example of a first embodiment of the vehicle according to the invention,
- Figure 2 is an additional perspective view of a second example of the first embodiment of the vehicle according to the present invention,
- Figure 3 is a perspective view on an enlarged scale and partially cross-sectioned of the rear wheel assembly of the vehicle according to any of the examples of Figures 1 and 2.
- Figure 4 is another cross-sectioned perspective view of the rear wheel assembly of the vehicle,
- Figure 5 is a view, on an enlarged scale, of a detail of Figure 4,
- Figure 6 is a schematic front view of the rear wheel assembly illustrated in a laterally tilted condition, which the rear wheel assembly assumes when the vehicle travels around a bend, and
- Figure 7 is another partially cross-sectioned perspective view of the rear wheel assembly according to a further example of the first embodiment of the invention.
- Figure 8 shows a purely electric variant, with rear wheels placed outside the frame, and a frame that rests on the outer casing of the motor assembly while the wheels are fixed on two flanges, in turn, fixed on the crankshaft. The motor assembly can be of the DC type powered directly by batteries or, preferably, an induction or reluctance AC motor, for example, powered by an inverter,
- Figure 9 is a view of the arrangement of the planar battery compartment positioned on the surface on which the feet rest, with an inverter downstream of the battery pack, which powers the motor, and battery pack that can be of the "swapping" type, replaceable with another charge,
- Figures 10, 11 show cargo vehicle configurations with a rear luggage holder that exploits the space between the two rear wheels to maximize the useful volume, while keeping the center of gravity as low as possible in order to improve the stability of the vehicle and its controllability,
- Figure 12 shows a variant of the solution of Figure 11,
- Figure 13 is a front view of a rear wheel of a second embodiment of the invention,
- Figure 14 is a partially cross-sectioned perspective view of the second embodiment,
- Figures 15, 16 are variants of Figures 13, 14, respectively, corresponding to a third embodiment, and
- Figures 17 and 18 are perspective views showing an additional variant of the vehicle, in a first operating condition, with the front wheel raised by a stand, in which the front wheel acts as a wind rotor, and a second operative condition of the vehicle in use,

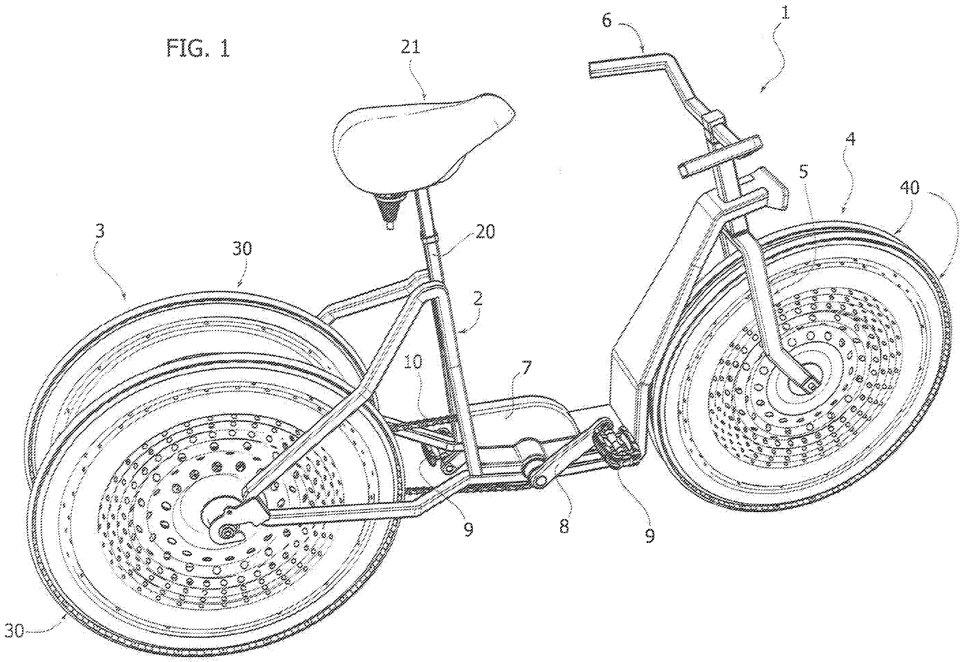

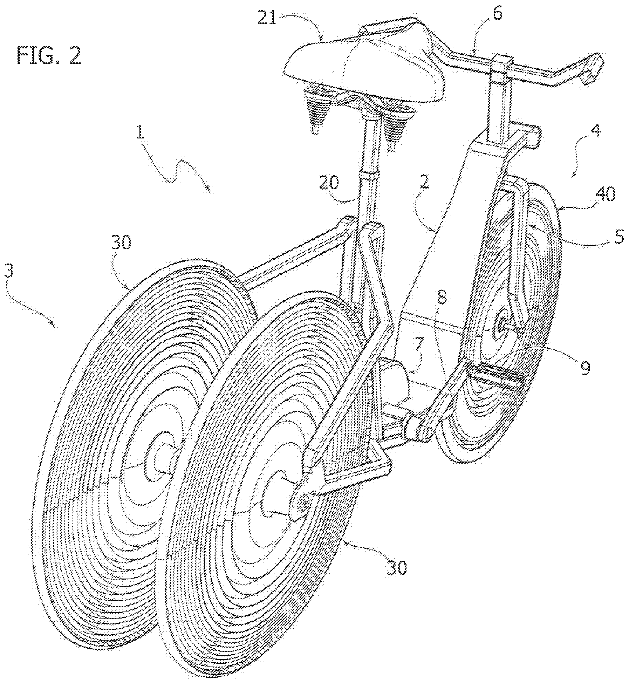

In Figures 1 and 2, the reference number 1 indicates an embodiment of a vehicle according to the invention, substantially in the form of a bicycle, comprising a frame 2 carrying a rear wheel assembly 3 and a front wheel steering assembly 4. The only substantial difference between the examples of Figures 1 and 2 lies in the fact that, in the case of Figure 2, the front wheel assembly provides a single wheel 40, whereas in the case of Figure 1, the front wheel assembly provides two front wheels 40, produced in a similar manner to that described below with reference to the rear wheel assembly 3. The bicycle frame 2 is not illustrated in detail here, since it can be made in any known manner. According to a conventional bicycle, also in the case of the example of Figures 1, 2, the frame 2 rotatably supports a steering assembly including a fork 5 carrying the front wheel assembly 4 and connected to a handlebar 6. Still in a conventional manner, the frame 2 includes a saddle-support tube 20 carrying a saddle 21. A characteristic, instead, which preferably distinguishes the vehicle frame according to the invention with respect to conventional solutions lies in that the crankset (of which Figures 1, 2 show only the casing 7) includes one or more crown gears (not visible in the Figures 1, 2) connected in rotation with cranks 8 with which the pedals 9 are associated and arranged in a substantially centered position in the longitudinal median plane of the vehicle, i.e. not on one side with respect to said median plane, as occurs in conventional bicycles. This centered arrangement of the front crown gears derives from the configuration of the rear wheel assembly, which is described hereinafter.

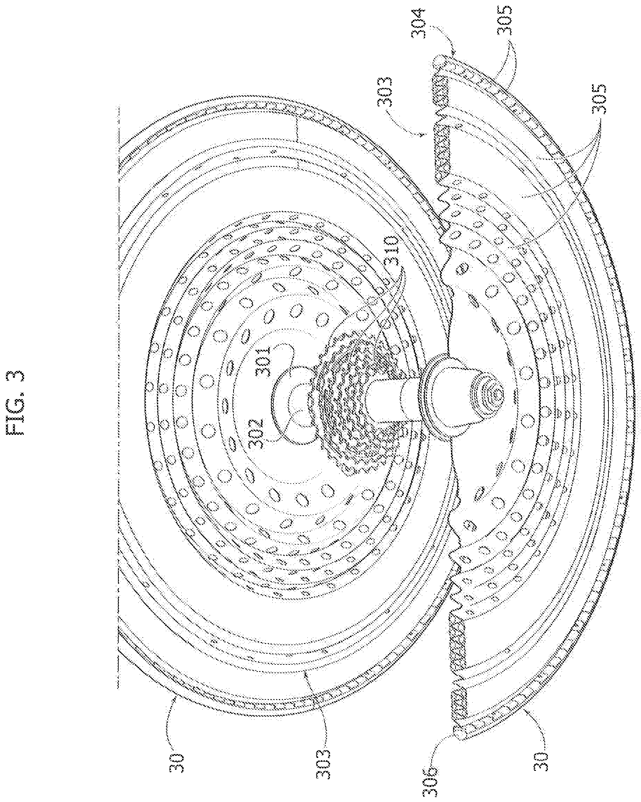

According to an important characteristic of the invention, the rear wheel assembly 3 includes two side-by-side rear wheels 30, having substantially the same diameter and respective hubs 301 (see Figure 3) connected to each other. Although the use of a differential is not excluded, the example shown here refers to the case in which the rear wheels 30 have their hubs 301 rigidly connected to a common wheel shaft 302, in order to be rotatably coupled with each other. Each rear wheel 30 comprises a wheel disc 303 centrally connected to the respective wheel hub 301, and having a peripheral circumferential portion 304 for contact with the ground.

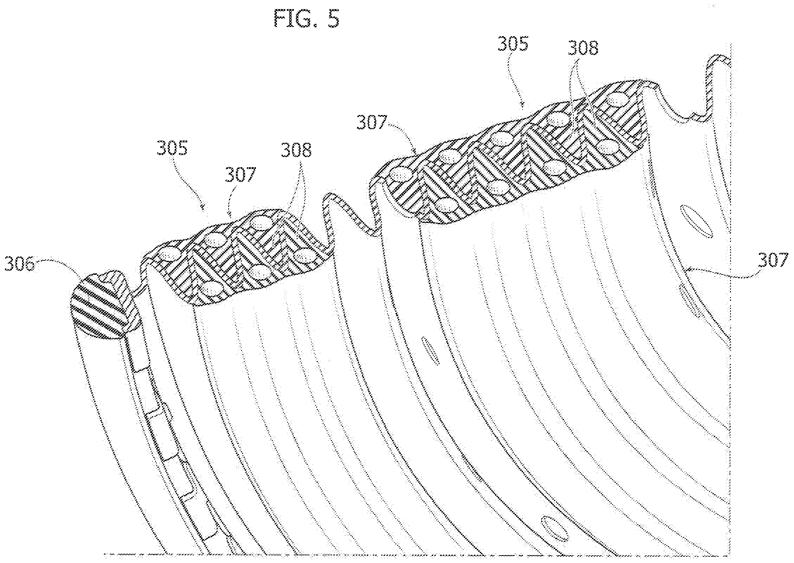

In the preferred example illustrated, each wheel disc 303 consists of a single wall having one or more corrugated circumferential portions 305, which are elastically deformable in a radial direction. As can be seen in detail in Figure 5, each corrugated circumferential portion 305 has a corrugated profile cross-section so as to define a plurality of circumferential ridges alternating with circumferential recesses, according to a general "bellows-shape" or accordion configuration, on each of the two faces of the wheel disc, which allows the wheel disc to deform elastically in the radial direction, during use of the bicycle, at the portion of the wheel disc comprised between the wheel hub 301 and the part of the wheel that is in contact with the ground, so as to allow lateral tilting of the bicycle around a bend.

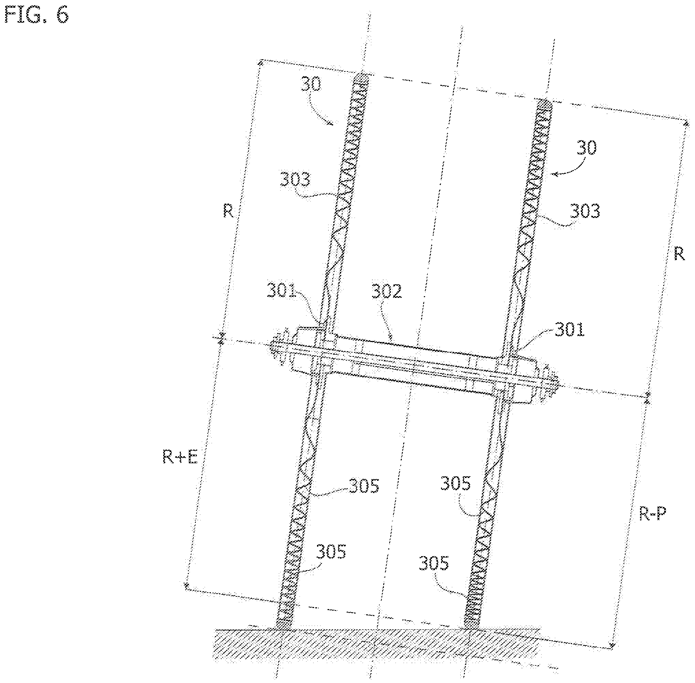

As already discussed above, the corrugated circumferential portions 305 perform both the function of elastic suspension and the function of allowing a differentiated deformation of the two rear wheels 30, and consequently lateral tilting of the vehicle at a bend, according to that schematically illustrated in Figure 6.

The elastic suspension function of the corrugated circumferential portions 305 also allows, if required, the inflatable tire of the wheel to be eliminated. Accordingly, each wheel disc 303 has a peripheral circumferential portion including fins 305 for retaining a ring of elastomeric material 306 (Figure 3), at full cross-section, acting as a contact element with the ground. The surface of the ring of elastomeric material 306 is preferably treated and/or configured in order to exhibit high resistance to wear and low rolling friction. The distribution of the stress on two wheels allows the sum of the impressions or contact area on the road of the two discs to be preferably less than, or at most equal to, the contact area of a conventional tire of a normal moped or scooter. On one hand, the two wheels reduce the rolling resistance, increasing efficiency, and on the other, they increase vehicle stability on the road, especially on wet or icy roads.

The wheel disc 303 of each rear wheel 30 consists of a single wall (monolayer or multilayer) defining the aforesaid corrugated circumferential portions. Still according to a preferred characteristic, the material selected for each wheel disc is high-strength and highly elastic steel, in particular Dual Phase steel, or a composite material including a synthetic resin matrix reinforced with fibers. As indicated, the wall constituting the wheel disc can provide several layers coupled together, each made of a composite material or high-strength steel.

In a preferred variant, each rear wheel 30 is provided with a device that allows adjustment of the flexibility of one or more corrugated circumferential portions and/or variation of the configuration of said corrugated circumferential portions.

According to a first solution, on one or both faces of one or more of the corrugated circumferential portions 305, rings of elastomeric material 307 are applied by gluing, by screwing or by snap-in (see Figure 5), each including one or more circumferential ribs 308, which can be coupled within respective annular recesses defined by the corrugated portions 305. Of course, it is possible to provide different configurations of the rings 307, in which each ring has a different number of ribs 308 and it is also possible to associate these rings of elastomeric material with different corrugated portions 305, so as to adjust the elastic response of the wheel disc according to that required, relative to radial deformations. Firstly, this enables the manufacturer to produce different bicycles with different characteristics to respond to different market segments, and/or allow the individual user to vary the characteristics of his bicycle, depending on the use.

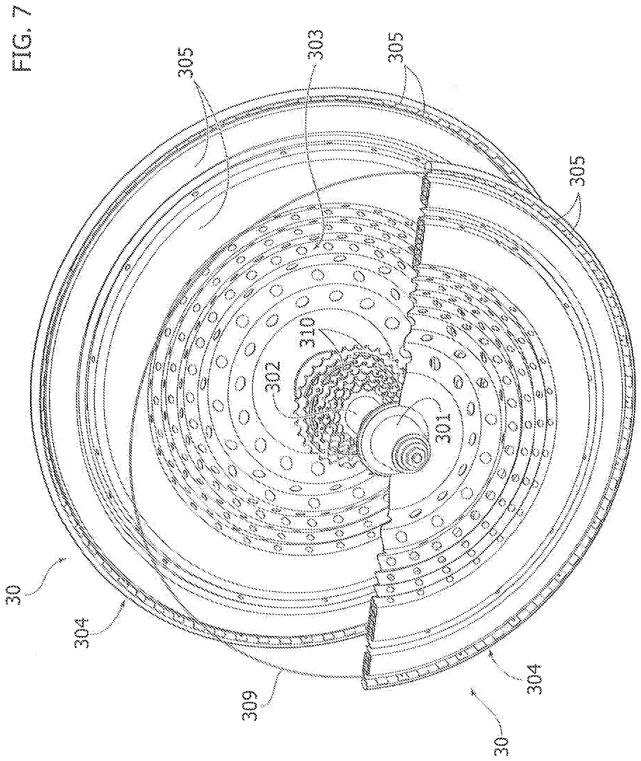

As an alternative to this adjustment device, the bicycle according to the invention can be provided with an adjustment device comprising one or more wires with adjustable length 309 (Figure 7 illustrates the application of a single wire 309), each wound around a respective corrugated portion of the wheel disc 303. Each wire 309 is wound in a ring and has opposite ends connected to each other so as to be able to adjust the mutual position thereof. It is possible to provide a manual connection system (not illustrated), for example of the tie-road screw type, or also a regulation system by means of an electric actuator powered by a laminated accumulator or simply integrated into the wheel disc and, in turn, powered by a photovoltaic cell integrated with the disc. In a simpler implementation configuration, the electric actuator is powered by an electric cable, which is connected to the central battery via the hub. Each wire 309 can be a flexible wire of metallic or synthetic material. It is also envisaged that each wire 309 has at least one portion consisting of a shape memory metal alloy whose length is controlled by means of heating obtained by supplying electric current.

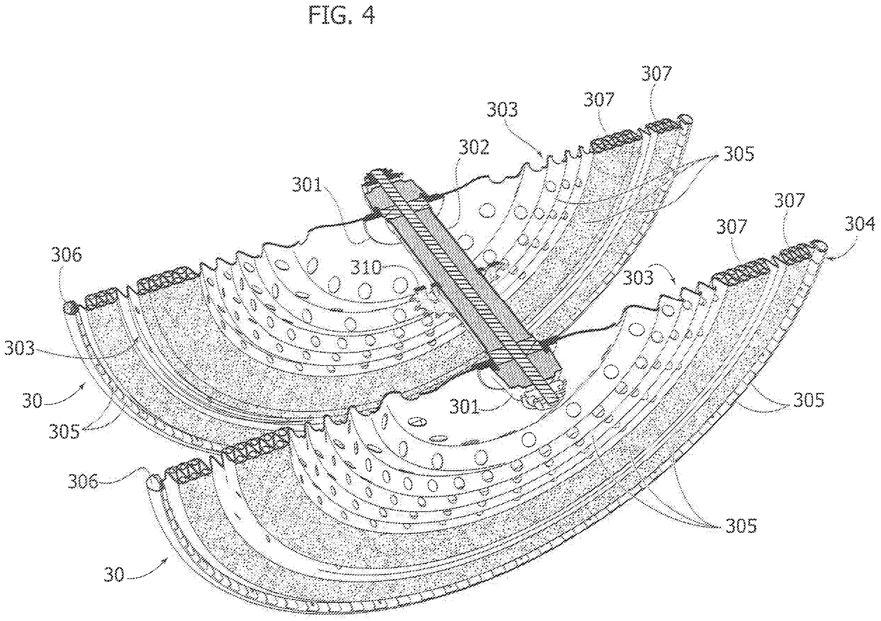

With reference again to Figures 3, 4 and 7, the shaft 302, which rigidly connects the two wheels 30 of the rear wheel assembly 3 carries one or more pinions 310 for selective engagement with the transmission chain 10 (Figure 1) of the bicycle. The pinions 310 are arranged between the two rear wheels 30, substantially in the longitudinal median plane of the bicycle, in a condition aligned with the chain 10 and with the crown gears of the crankset assembly of the bicycle. In this way, the chain 10, the rear pinions 310 and the front crown gears of the bicycle transmission system are in a protected zone, which also eliminates the risk of interference with the user's legs.

The two rear wheels 30 are axially spaced apart from each other by a length that is 0.2 to 0.95 times their diameter, preferably between 0.3 and 0.4 times their diameter, in such a way that the bicycle has a stable upright static position, thanks to the support on the two rear wheels 30 and the front wheel assembly 4, while at the same time, the two rear wheels are close enough so that the difference in their rotations at a bend is small enough to be compensated by the different elastic deformation of the corrugated portions 305 of the rear wheels 30, according to that illustrated in Figure 6.

With reference to Figure 6, when the bicycle travels around a bend, the rear wheel 30 on the inner side of the bend is subjected to a greater radial deformation at the portion of the wheel between the wheel hub and the portion in contact with the ground. The wheel on the outer side is subjected to a lower load with respect to when it is vertical so that it undergoes an expansion. This causes a difference in the radius of the two rear wheels 30 in the part in contact with the ground, which allows these wheels to have different peripheral speeds in the aforesaid parts in contact with the ground, although they have substantially the same angular rotation speed, being both coupled to the same shaft 302. The ideal deformation of the corrugated portions 305 of the wheel discs 303 therefore allows both lateral bending of the bicycle during bends, and the compensation of the different peripheral speeds of the two wheels in the bend. In this way, the wheel assembly can have an extremely simple structure, with both wheels rigidly connected to the same wheel shaft 302, and the driving sensation for the user is the same as for a conventional bicycle.

Of course, the spacing between the two rear wheels 30 must be sufficiently small so that the aforesaid compensation can be achieved without appreciable sliding between the wheels and the ground.

Another important advantage of the present invention is that each of the two rear wheels 30 can have a significantly reduced width compared to that of a conventional bicycle wheel, with a consequent reduction in the overall rolling resistance. Thanks to the structure and configuration described above, the weight of the bicycle can also be considerably reduced. In addition, the discs can be produced at a low cost as they are elements that can be made using hot- or cold-molding techniques.

As already indicated above, in the case of the solution illustrated in Figure 1, the front wheel assembly 4 also has two side-by-side front wheels 40, each of which can have a structure completely analogous to that described above with reference to the rear wheels 30, in order to obtain a front elastic suspension of the bicycle. In the case of the front wheels, since there is no need to provide space for the pinions, the spacing between the wheels can be even smaller than that of the rear wheels, being sufficient moreover, in order to obtain a stable upright static position of the bicycle, that the bicycle rests on the two rear wheels and on a concentrated front support point, defined by a single front wheel or two twin front wheels.

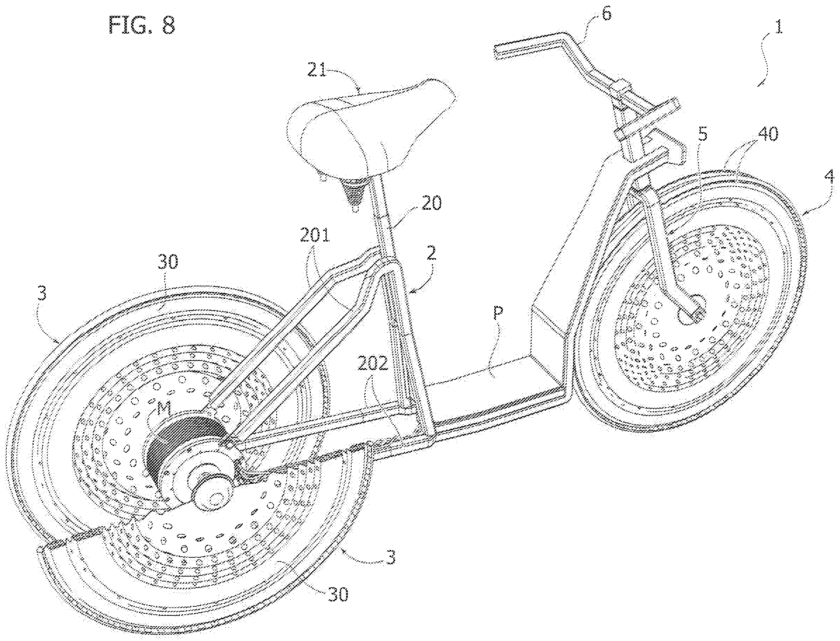

The part of the frame that supports the rear wheel assembly can be arranged outside the wheels (Figures 1 and 2) or inside them (Figure 8).

In the case of a purely electric propulsion vehicle (Figure 8), an electric motor M with direct current or alternating current positioned between the two rear wheels can be provided, and with a crankshaft directly connected symmetrically to the two rear wheels. With reference to Figure 8, in this embodiment the frame 2 comprises two pairs of tubular elements 201, 202 extending in the space between the two rear wheels and converging towards end portions, which support the stator of the electric motor M. The rotor of the motor M is directly connected in rotation with the wheel shaft 302, which is arranged coaxially through the rotor and has opposite ends symmetrically protruding from the motor and connected to the two rear wheels 30.

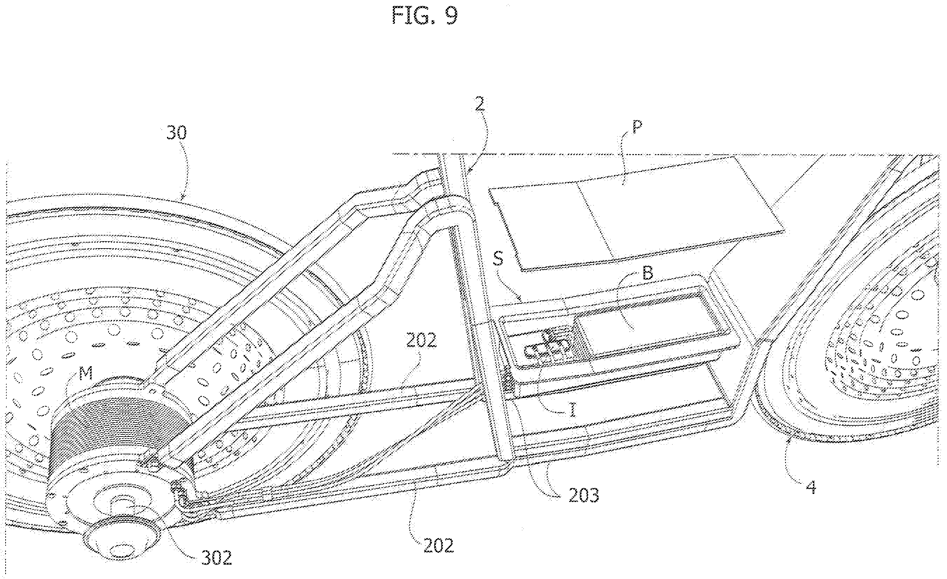

With reference to Figure 9, the battery pack B for powering the electric motor is received in a replaceable manner, together with an inverter I, in a substantially flat box S, with a height of less than 5 cm and a width less than 12 cm, closed by a lid P acting as a floor-footboard. The box S extends over the entire length of the vehicle floor/footboard, and is mounted in a replaceable manner between two tubular elements 203 of the frame 2.

In a variant, in the case of electric or pedal-assisted propulsion, the electric motor has a stator positioned between the two pedals and a crankshaft directly connected symmetrically to the two pedals, possibly via an electromechanical joint of any known type, for the disengageable coupling between pedals and crankshaft.

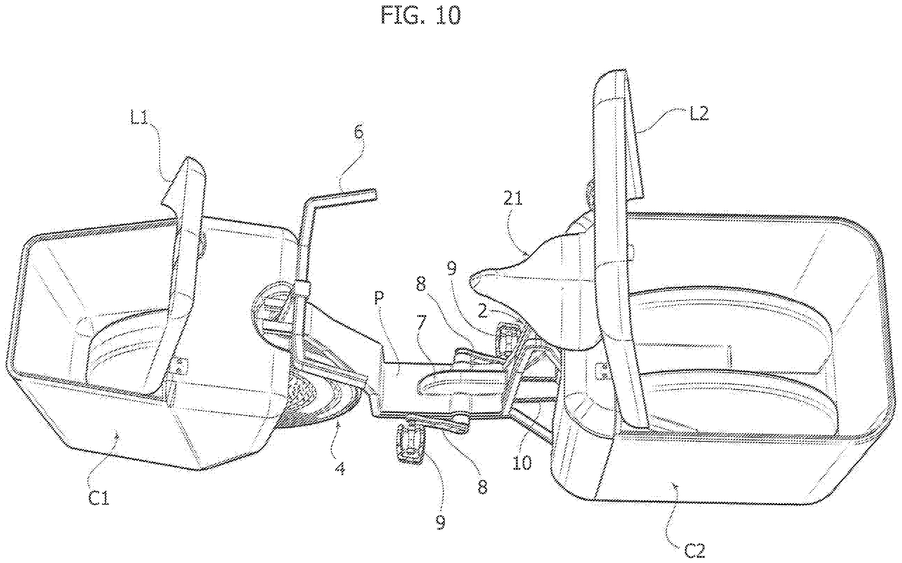

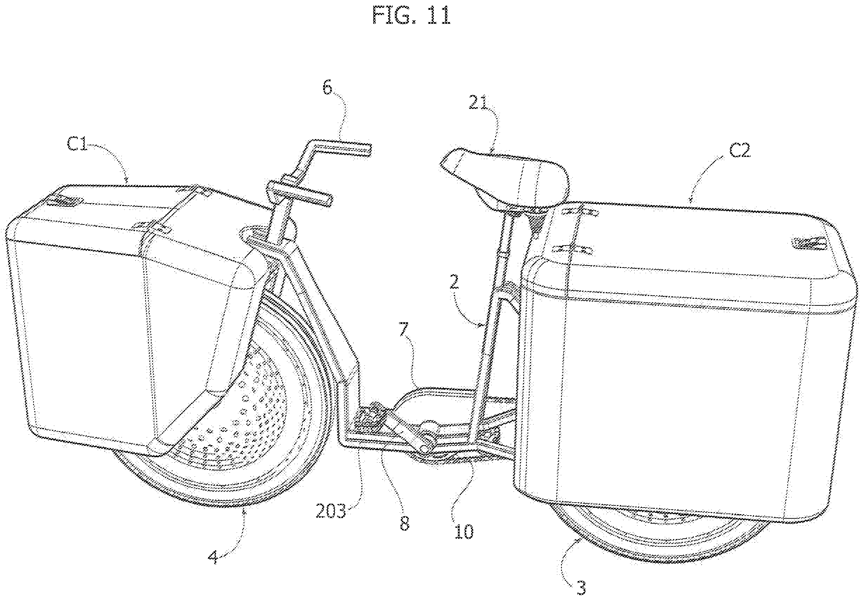

The variants of Figures 10, 11 have a front luggage carrier C1 and a rear luggage carrier C2, equipped with covers L1, L2. The rear luggage carrier C2 exploits the space between the two wheels to maximize the useful volume while keeping the center of gravity low.

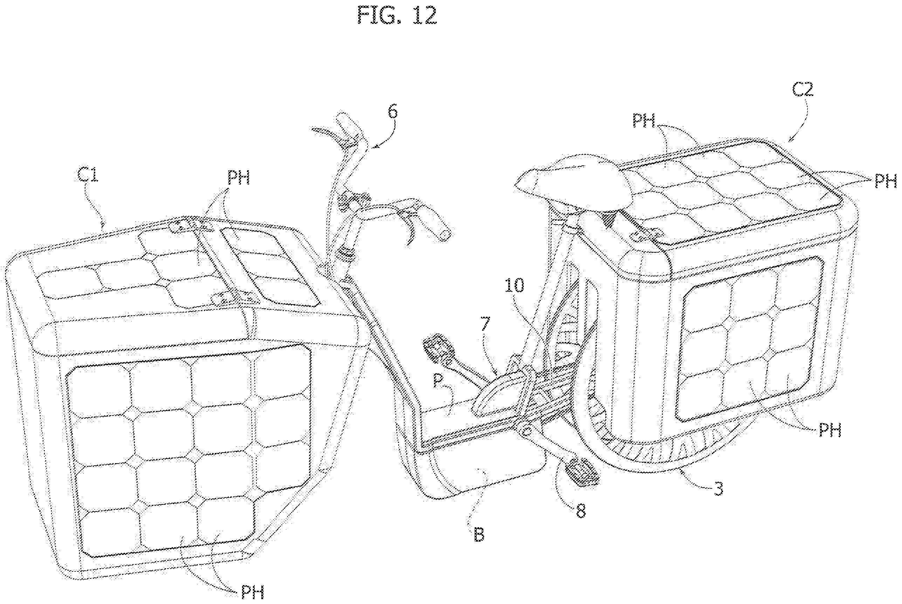

Figure 12 shows a variant of Figure 11, in which the front luggage carrier C1 and the rear luggage carrier C2 have outer surfaces that bear a distribution of photovoltaic panels PH.

Finally, it should be noted that there is an invention - independent of that which has been described above - namely a wheel for both muscle- and electric-propelled vehicles, in particular a wheel for a bicycle, moped, scooter or motorcycle in general, usable for example in a vehicle of the type described above, or, alternatively, for example in a conventional bicycle, this wheel having the characteristics that have been described above with reference to each of the rear wheels of the vehicle according to the invention.

Therefore, an independent invention of the Applicant is a vehicle wheel, in particular a bicycle, moped, scooter or motorcycle wheel in general, comprising a wheel disc that connects a central hub to a peripheral circumferential portion for contact with the ground, wherein the wheel disc comprises one or more concentric circumferential portions, each having a corrugated configuration, so as to deform elastically in a radial direction, during use of the vehicle, in the portion of the wheel disc comprised between the wheel hub and the part of the wheel that is in contact with the ground, so as to allow lateral tilting of the vehicle around a bend,
wherein said wheel also has one or more of the following characteristics:
- the wheel disc is formed of a material selected from high-strength steel and a composite material including a synthetic resin matrix reinforced with fibers arranged in such a way as to facilitate radial deformation of the disc,
- the wheel disc has a single monolayer wall or a single multilayer wall including a plurality of layers, each made of high-strength steel or a composite material,
- the wheel disc is provided with a device for adjusting the configuration and/or the flexibility of the corrugated portions of the wheel disc.
- the wheel disc is coated with a nano-coating with dirt-repelling properties and, in particular, water-repelling properties according to materials applicable by hot- or cold-spray or using a brush. In this way, the peripheral part acting as a tire does not drag water with it, thus the use of protective casings, which are expensive and aerodynamically negative, are not required.

Analogously to that illustrated above for the vehicle according to the invention, even in the case of the invention relating only to the wheel taken separately, the aforesaid adjustment device can comprise one or more rings of elastomeric material, applicable on one or both faces of one or more of said corrugated circumferential portions of the wheel disc, each ring of elastomeric material including one or more circumferential ribs that can be coupled with respective annular recesses defined by said corrugated portions. Or, alternatively, the said adjustment device can comprise one or more wires with adjustable length, each wound around a respective corrugated portion of said wheel disc.

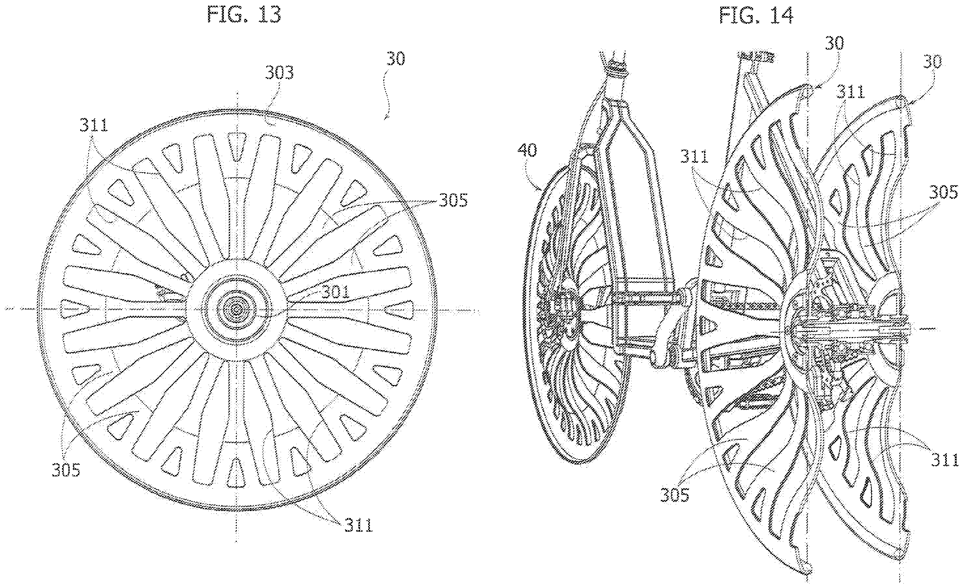

In the embodiment illustrated in Figures 13, 14, each rear wheel 30, and also the front wheel 40, if required, comprises a plurality of elastically deformable radial portions 305 that connect the wheel hub 301 to the peripheral circumferential portion 306. The elastically deformable radial portions 305 are defined by a plurality of notches 311 formed in a single wheel disc 303. The wheel disc 303 is shaped in such a way that each radial portion 305 has a corrugated conformation, with a part thereof closer to the periphery of the wheel that is concave towards one side of the wheel and a part thereof closer to the wheel hub that is concave towards the opposite side of the wheel.

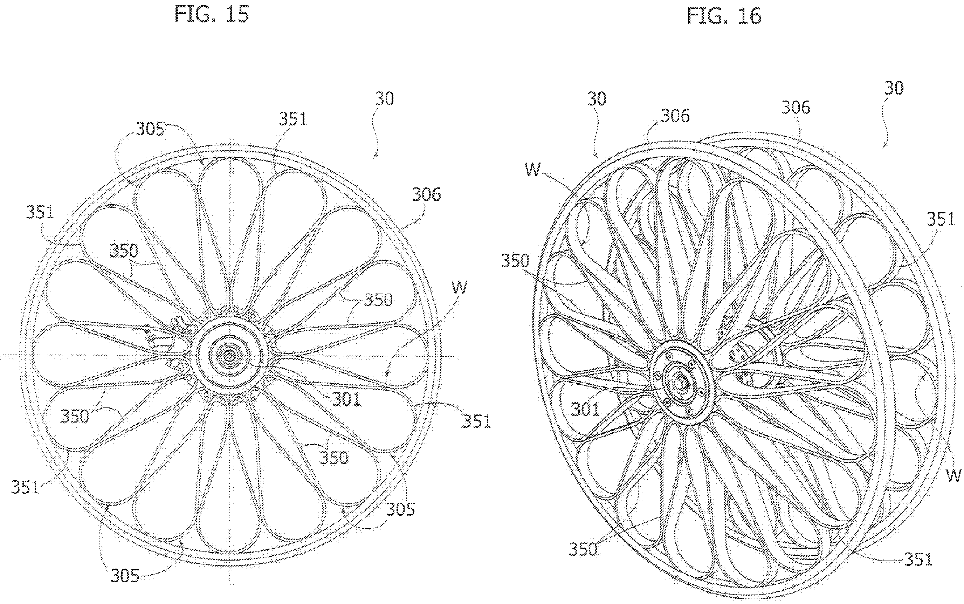

In the embodiment, illustrated in Figures 15, 16, the elastically deformable radial portions 305 are defined by at least one band, for example, high-strength steel or a composite material, shaped in such a way as to define a plurality of radial lobes 305, each comprising two facing walls 350, contained in planes parallel to the axis of the wheel, diverging in a radial direction outwards and connected to each other at the periphery of the wheel by a curved portion 351 of said band W.

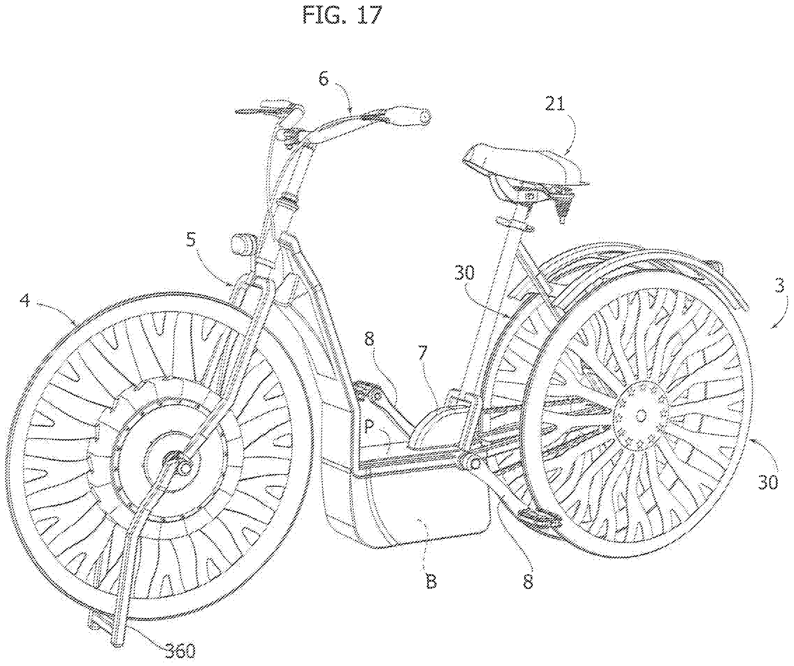

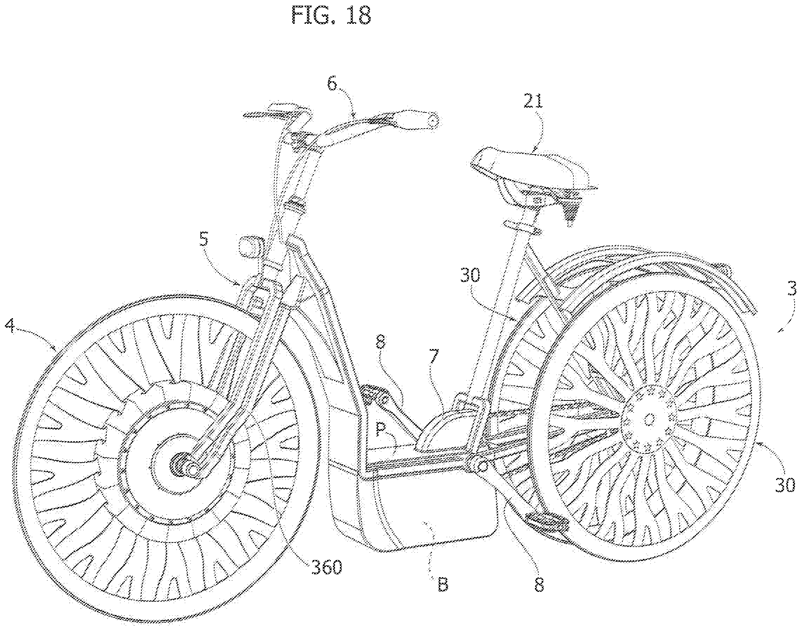

Figures 17, 18 show the operative and rest positions of a stand 360, configured for maintaining the front wheel assembly 4 spaced apart from the ground. The front wheel, or the front wheels, forming part of the front wheel assembly 4 are shaped so as to be able to act as a wind rotor, capable of being rotated, in the raised condition of Figure 17 by a lateral wind flow. The hub of the front wheel assembly is connected, by means of a mechanical transmission not illustrated (which can be made in any known way), to an electric generator (not shown), which can be used to charge the on-board electric battery of the vehicle.

According to another characteristic, the vehicle is provided with a miniaturized multisensory electronic platform. By way of example, a platform with dimensions of 40 mm x 40 mm x 2 mm comprises two micro-cameras, an inertial platform, two accelerometers that can also be used as inclinometers; sensor arrays for directional speech recognition; side, front and rear proximity sensors; a high capacity and memory processor; and a system for internet connectivity through purely interactive or voice navigation.

A wireless and/or wired system is provided for interface with a smartphone and with the powertrain of the ride-on vehicle.

The aforesaid platform can be used for different purposes:
1) as an anti-theft system configured to inhibit the use of the vehicle and/or disable the functions of an electronic controller of the vehicle, said anti-theft device being unlockable by means of a speech and/or facial recognition system; the image of a stranger who attempts to use the vehicle is sent to a proprietary digital device that decides whether or not to authorize the use of the vehicle;
2) as a vehicle-vehicle ("V2V") or vehicle infrastructure ("V2I") connection system or, more generally, connection system of a vehicle to another device provided with communication ("V2X");
3) as a system for controlling the assisted braking, based on the use of one or two cameras configured to recognize an obstacle on the road, a hole in the same road or, more generally, a dangerous situation. As is known, the sum of the perception and reaction times of a person in the best of cases is in the order of 1.5 seconds up to over 3 seconds for elderly people. For an electronic device, the sum of the perception and implementation times can be contained in less than one 10th of a second: this time difference serves to mitigate and sometimes avoid the consequence of an accident. The signal of the danger recognition means is first processed by the on-board processor and then sent to the control system of the motor or directly to the braking system;
4) for interfacing a camera that frames the scene surrounding the vehicle and an internet tracking system in order to provide the driver of the vehicle with information about the place or buildings on the road traveled;
5) as a system of measuring the tilting of the vehicle in the event of heavy braking or on slippery-icy roads, capable of triggering a combined action between the two rear wheels and the front one in order to counteract the force that tends to overturn the vehicle;
6) as a system for optimizing energy recovery in the event of braking or releasing the acceleration system, according to known methods in four-wheel vehicles;
7) as a means of interface between a smartphone and the powertrain control system of the vehicle included, in particular for charging, by means of an external charger; for managing the battery pack; for managing either portable photovoltaic panels or those integrated in vehicle surfaces;
8) to control proximity sensors that warn the driver both acoustically and on the smartphone screen when a vehicle with two or more wheels approaches at a critical distance, either laterally or from behind.

In a variant, the peripheral circumferential portion of each rear wheel comprises a tire filled with expanded plastic material, said tire being preferably internally lined with a lubricating fluid, to facilitate filling with expanded plastic material.

Of course, without prejudice to the principle of the invention, the details of construction and the embodiments may vary widely with respect to those described and illustrated purely by way of example, without departing from the scope of the present invention defined by the following claims.

## Claims

1. A ride-on vehicle, comprising a frame (2), a rear wheel assembly (3) supported by the frame (2) and a front wheel assembly (4) supported by a steering assembly (5) associated with the frame (2), whereby:
- the rear wheel assembly (3) includes two side-by-side rear wheels (30) having substantially equal diameters and respective hubs (301) rotatably coupled together,
- each rear wheel (30) comprises a peripheral circumferential portion (306) for contact with the ground connected to a central wheel hub (301) by means of one or more corrugated elastic elements (305) configured to elastically deform in a radial direction, during use of the vehicle, at the portion of the wheel (303) comprised between the wheel hub and the part of the wheel that is in contact with the ground, so as to allow lateral tilting of the vehicle at a bend,
- the two rear wheels (30) are axially spaced apart from each other by a length that is 0.2 to 0.95 times their diameter, preferably between 0.3 and 0.4 times their diameter, in such a way that the vehicle has a stable upright position, thanks to the support on the two rear wheels (30) and the front wheel assembly (4), while at the same time, the two rear wheels (30) are close enough so that the difference in their peripheral speeds at a bend is small enough to be compensated by the different elastic deformations of the corrugated elastic elements (305) of the two rear wheels (30).

2. A vehicle according to claim 1, **characterized in that** the shaft (302) of said rear wheel assembly (3) carries one or more pinions (310) in selective engagement with a transmission chain (10) of the vehicle, and **in that** said one or more pinions (310) and the chain (10) associated with them are arranged between the two rear wheels (30).

3. A vehicle according to claim 1, **characterized in that** the hubs (301) of the rear wheels (30) are rigidly connected to a common wheel shaft (302).

4. A vehicle according to claim 2, **characterized in that** said frame (2) rotatably supports a crankset assembly including one or more crown gears for engaging the vehicle transmission chain (10), which are substantially centered on the longitudinal median plane of the vehicle and substantially aligned with said one or more pinions (310) arranged between the rear wheels (30).

5. A vehicle according to claim 1, **characterized in that** each rear wheel (30) comprises a wheel disc (303), which connects the wheel hub (301) to said peripheral circumferential portion (306) for contact with the ground, and **in that** the wheel disc (303) of each rear wheel (30) comprises one or more concentric circumferential portions (305) each having a corrugated configuration, so as to constitute said one or more elastic elements configured to elastically deform in the radial direction, during use of the vehicle, at the portion of the wheel disc (303) comprised between the wheel hub (301) and the part of the wheel that is in contact with the ground, so as to allow lateral tilting of the vehicle at a bend.

6. A vehicle according to claim 5, **characterized in that** the wheel disc (303) of each rear wheel (30) is formed of a highly elastic material selected from high-strength steel, in particular Dual Phase steel with a value of 1500DP or higher, and a composite material including a synthetic resin matrix reinforced with fibers.

7. A vehicle according to claim 6, **characterized in that** the wheel disc (303) of each rear wheel (30) is formed of a multilayer wall including a plurality of layers each made of high-strength steel or a composite material.

8. A vehicle according to claim 5, **characterized in that** the wheel disc (303) of each rear wheel (30) comprises a single wall including the aforesaid corrugated portions (305).

9. A vehicle according to claim 1, **characterized in that** the elastically deformable disc (303) of each rear wheel (30) has a radially variable thickness and/or corrugated portions having a cross-section with a corrugated profile with radially variable frequency and/or amplitude of the undulations.

10. A vehicle according to claim 5, **characterized in that** the wheel disc (303) of each rear wheel (30) is provided with a device (308; 309) for adjusting the configuration and/or flexibility of said corrugated portions (305) of the wheel disc (303).

11. A vehicle according to claim 10, **characterized in that** said adjustment device comprises one or more rings of elastomeric material (308) applicable on one or both faces of one or more of said corrugated circumferential portions (305) of the wheel disc (303), each ring of elastomeric material (308) including one or more circumferential ribs configured to be received within respective annular recesses defined by said corrugated portions (305).

12. A vehicle according to claim 10, **characterized in that** said adjustment device comprises one or more wires with adjustable length each wound around a respective corrugated portion (305) of said wheel disc (30).

13. A vehicle according to claim 12, **characterized in that** said adjustable-length wires (309) are flexible wires wound in a ring and having ends coupled together in a relative position adjustable manually or by mean of an actuator, or are wires having at least one portion consisting of shape memory metal alloy, electrically-controlled, acting as an actuator.

14. A vehicle according to claim 1, **characterized in that** the peripheral circumferential portion of each rear wheel comprises a tire filled with expanded plastic material, said tire being preferably lined internally with a lubricating fluid, to facilitate filling with expanded plastic material.

15. A vehicle according to claim 1, **characterized in that** the front wheel assembly (4) also has two side-by-side front wheels (4) each having a structure with the same configuration as the rear wheels (30).

16. A vehicle according to claim 1, **characterized in that** the frame extends externally to the two rear wheels or internally between them.

17. A vehicle according to claim 1, **characterized in that** it has an electric propulsion system, with an electric motor (M) with direct current or alternating current, supported by the frame (2) between the two rear wheels, and with a crankshaft having opposite ends symmetrically protruding from the motor and connected to the two rear wheels (30).

18. A vehicle according to claim 1, **characterized in that** it comprises an electric motor and a battery pack (B) having a substantially flat box (S), of a height of less than 5 cm and a width of less than 12 cm, arranged along the entire length of a floor portion (P) of the vehicle, connected rigidly to the frame and configured to be replaceable.

19. A vehicle according to claim 1, **characterized in that** it has an electric or electrically-assisted pedaled propulsion system, with an electric motor having a stator positioned between the two pedals and with a crankshaft directly connected symmetrically to the two pedals and preferably with an electromechanical joint for the disengageable coupling between pedals and crankshaft.

20. A vehicle according to claim 1, **characterized in that** it is provided with a rear luggage carrier (C2), which exploits the space between the two rear wheels (30) to maximize the useful volume, while keeping the center of gravity low, and/or with a front luggage carrier (C1).

21. A vehicle according to claim 20, **characterized in that** said front luggage carrier (C1) and/or said rear luggage carrier (C2) bear a distribution of photovoltaic panels on their outer surface.

22. A vehicle according to claim 1, **characterized in that** each rear wheel (30) comprises a plurality of elastically deformable radial portions (305) that connect the wheel hub (301) to said peripheral circumferential portion (306) for contact with the ground, said elastically deformable radial portions being defined by a plurality of notches (311) formed in a single wheel disc (303), said wheel disc being shaped in such a way that each radial portion (305) has a corrugated conformation, with a part thereof closer to the periphery of the wheel concave towards one side of the wheel, and a part thereof closer to the hub of the wheel concave towards the opposite side of the wheel.

23. A vehicle according to claim 1, **characterized in that** said elastically deformable radial portions (305) are defined by at least one band (W), for example, high-strength steel or a composite material, shaped in such a way as to define a plurality of radial lobes (305), each comprising two facing walls (350), contained in planes parallel to the axis of the wheel, diverging in a radial direction outwards and connected to each other at the periphery of the wheel by a curved portion (351) of said band (W).

24. A vehicle according to claim 1, **characterized in that** it is provided with a stand (360) configured to maintain the front wheel assembly (4) spaced apart from the ground, **in that** said front wheel assembly (4) is shaped so as to be able to act as a wind rotor, and **in that** said front wheel assembly (4) has a hub connected to an electric generator, usable for charging a battery that the vehicle is provided with.

25. A vehicle according to claim 1, **characterized in that** it is provided with a miniaturized multisensory electronic platform, comprising one or more components selected from:
- one or more micro-cameras,
- an inertial platform,
- one or more accelerometers that can also be used as inclinometers,
- sensor arrays for directional speech recognition,
- side, front and rear proximity sensors,
- a processor,
- a system for internet connectivity,
- a wireless and/or wired system for interface with a smartphone and with the powertrain of the ride-on vehicle,
said platform being configured to be used in one or more of the following ways:
a) as an anti-theft system configured to inhibit the use of the vehicle and/or disable the functions of an electronic controller of the vehicle, said anti-theft device being unlockable by means of a speech and/or facial recognition system and being configured to send the image of a stranger who attempts to use the vehicle to a proprietary digital device that decides whether or not to authorize the use of the vehicle;
b) as a vehicle-vehicle or vehicle infrastructure connection system or, more generally, connection system of a vehicle to another device provided with communication;
c) as a system for controlling assisted braking, based on the use of one or two cameras configured to recognize an obstacle on the road, a hole on the road, or more generally a dangerous situation, the system being configured to process the danger recognition signal in an on-board processor and then sending the processed signal to the motor control system or directly to the vehicle's braking system;
d) for interfacing a camera that frames the scene surrounding the vehicle and an internet tracking system in order to provide the driver of the vehicle with information about the place or buildings on the road traveled;
e) as a system of measuring the tilting of the vehicle in the event of heavy braking or on slippery-icy roads, capable of triggering a combined action between the two rear wheels and the front one in order to counteract the force that tends to overturn the vehicle;
f) as a system for optimizing energy recovery in the event of braking or releasing the acceleration system, according to known methods in four-wheel vehicles;
g) as a means of interface between a smartphone and the powertrain control system of the vehicle, in particular for charging, by means of an external charger; for managing the battery pack; for managing either portable photovoltaic panels or those integrated in vehicle surfaces;
h) to control proximity sensors that warn the driver both acoustically and on the smartphone screen when another vehicle approaches at a critical distance, either laterally or from behind.

26. A vehicle according to claim 1, **characterized in that** at least the wheels of the rear wheel assembly have - at least on their peripheral portion - a coating of nanometric thickness with dirt-repelling and water-repelling properties, so as not to require the use of protective casings.

## Patentansprüche

1. Aufsitzfahrzeug, das einen Rahmen (2), eine Hinterrad-Baugruppe (3), die von dem Rahmen (2) getragen wird, sowie eine Vorderrad-Baugruppe (4) umfasst, die von einer mit dem Rahmen (2) verbundenen Lenk-Baugruppe (5) getragen wird, wobei:
- die Hinterrad-Baugruppe (3) zwei nebeneinander angeordnete Hinterräder (30) mit im Wesentlichen gleichen Durchmessern und jeweiligen Naben (301) umfasst, die drehbar miteinander verbunden sind,
- jedes Hinterrad (30) einen Umfangsrandabschnitt (306) für Kontakt mit dem Boden umfasst, der mittels eines oder mehrerer gewellten elastischen/gewellter elastischer Elementes/Elemente (305), das/die so ausgeführt ist/sind, dass es/sie sich beim Einsatz des Fahrzeugs in einer radialen Richtung elastisch verformt/verformen, drehbar mit einer mittigen Radnabe (301) an dem Abschnitt des Rades (303) verbunden ist, der zwischen der Radnabe und dem Teil des Rades eingeschlossen ist, der mit dem Boden in Kontakt ist, um so seitliches Neigen des Fahrzeugs in einer Kurve zu ermöglichen,
- die zwei Hinterräder (30) axial voneinander um ein Maß beabstandet sind, das das 0,2- bis 0,95-Fache ihres Durchmessers, vorzugsweise zwischen 0,3 und 0,4-Fache ihres Durchmessers, beträgt, so dass das Fahrzeug dank der Abstützung auf den zwei Hinterrädern (30) und der Vorderrad-Baugruppe (4) eine stabile aufrechte Position hat und gleichzeitig die zwei Hinterräder (30) so nahe beieinander liegen, dass der Unterschied ihrer Umfangsgeschwindigkeiten in einer Kurve so klein ist, dass er durch die unterschiedlichen elastischen Verformungen der gewellten elastischen Elemente (305) der zwei Hinterräder (30) ausgeglichen wird.

2. Fahrzeug nach Anspruch 1, **dadurch gekennzeichnet, dass** die Welle (302) der Hinterrad-Baugruppe (3) ein oder mehrere Ritzel (310) in selektivem Eingriff mit einer Übertragungs-Kette (10) des Fahrzeugs trägt, und dass das eine oder die mehreren Ritzel (310) und die ihm/ihnen zugeordnete Kette (10) zwischen den zwei Hinterrädern (30) angeordnet sind.

3. Fahrzeug nach Anspruch 1, **dadurch gekennzeichnet, dass** die Naben (301) der Hinterräder (30) starr mit einer gemeinsamen Radwelle (302) verbunden sind.

4. Fahrzeug nach Anspruch 2, **dadurch gekennzeichnet, dass** der Rahmen (2) drehbar eine Kurbelgarnitur-Baugruppe trägt, die einen oder mehrere Zahnkranz/Zahnkränze zum Eingriff mit der Übertragungs-Kette (10) des Fahrzeugs einschließt, der/die im Wesentlichen auf der LängsMittelebene des Fahrzeugs zentriert ist/sind und im Wesentlichen auf ein oder mehrere Ritzel (310) ausgerichtet ist/sind, das/die zwischen den Hinterrädern (30) angeordnet ist/sind.

5. Fahrzeug nach Anspruch 1, **dadurch gekennzeichnet, dass** jedes Hinterrad (30) eine Radscheibe (303) umfasst, die die Radnabe (301) mit dem Umfangsrandabschnitt (306) für Kontakt mit dem Boden verbindet, und dass die Radscheibe (303) jedes Hinterrades (30) einen oder mehrere konzentrischen/konzentrische Umfangsabschnitt/e (305) umfasst, die jeweils eine gewellte Form haben und das eine oder die mehreren elastische/n Element/e an dem Abschnitt der Radscheibe (303) bilden, der zwischen der Radnabe (301) und dem Teil des Rades eingeschlossen ist, der mit dem Boden in Kontakt ist, das/die so ausgeführt ist/sind, dass es/sie sich beim Einsatz des Fahrzeugs in der radialen Richtung elastisch verformt/verformen, um so seitliches Neigen des Fahrzeugs in einer Kurve zu ermöglichen.

6. Fahrzeug nach Anspruch 5, **dadurch gekennzeichnet, dass** die Radscheibe (303) jedes Hinterrades (30) aus einem hochelastischen Material besteht, das aus hochfestem Stahl, insbesondere Dualphasen-Stahl mit einem Wert von 1500DP oder darüber, und einem Verbundmaterial ausgewählt wird, das eine mit Fasern verstärkte Kunstharzmatrix enthält.

7. Fahrzeug nach Anspruch 6, **dadurch gekennzeichnet, dass** die Radscheibe (303) jedes Hinterrades (30) aus einer mehrschichtigen Wand ausgebildet ist, die eine Vielzahl von Schichten enthält, die jeweils aus hochfestem Stahl oder einem Verbundmaterial bestehen.

8. Fahrzeug nach Anspruch 5, **dadurch gekennzeichnet, dass** die Radscheibe (303) jedes Hinterrades (30) eine einzelne Wand umfasst, die die gewellten Abschnitte (305) enthält.

9. Fahrzeug nach Anspruch 1, **dadurch gekennzeichnet, dass** die elastisch verformbare Scheibe (303) jedes Hinterrades (30) eine radial variable Dicke und/oder gewellte Abschnitte aufweist, die einen Querschnitt mit einem gewellten Profil mit radial variabler Frequenz und/oder Amplitude der Welligkeit hat.

10. Fahrzeug nach Anspruch 5, **dadurch gekennzeichnet, dass** die Radscheibe (303) jedes Hinterrades (30) mit einer Vorrichtung (308; 309) zum Einstellen der Form und/oder Flexibilität der gewellten Abschnitte (305) der Radscheibe (303) versehen ist.

11. Fahrzeug nach Anspruch 10, **dadurch gekennzeichnet, dass** die Einstellvorrichtung einen oder mehrere Ring/e aus elastomerem Material (308) umfasst, der/die auf eine oder beide Flächen eines oder mehrerer der gewellten Umfangsabschnitte (305) der Radscheibe (303) aufgebracht werden kann/können, wobei jeder Ring aus elastomerem Material (308) eine oder mehrere Umfangsrippe/n enthält, die so ausgeführt ist/sind, dass sie in entsprechenden ringförmigen Aussparungen aufgenommen wird/werden, die durch die gewellten Abschnitte (305) gebildet werden.

12. Fahrzeug nach Anspruch 10, **dadurch gekennzeichnet, dass** die Einstellvorrichtung einen oder mehrere Draht/Drähte mit verstellbarer Länge umfasst, der/die jeweils um einen entsprechenden gewellten Abschnitt (305) der Radscheibe (30) herum gewickelt ist/sind.

13. Fahrzeug nach Anspruch 12, **dadurch gekennzeichnet, dass** die längenverstellbaren Drähte (309) flexible Drähte sind, die zu einem Ring gewickelt sind und deren Enden in einer relativen Position miteinander verbunden sind, die manuell oder mittels eines Betätigungselementes verstellt werden kann, oder Drähte sind, die wenigstens einen elektrisch gesteuerten Abschnitt aufweisen, der aus einer Formgedächtnis-Metalllegierung besteht und als ein Betätigungselement dient.

14. Fahrzeug nach Anspruch 1, **dadurch gekennzeichnet, dass** der Umfangsrandabschnitt jedes Hinterrades einen Reifen umfasst, der mit geschäumtem Kunststoffmaterial gefüllt ist, wobei der Reifen vorzugsweise innen mit einer Schmierflüssigkeit ausgekleidet ist, um Füllen mit geschäumtem Kunststoffmaterial zu erleichtern.

15. Fahrzeug nach Anspruch 1, **dadurch gekennzeichnet, dass** die Vorderrad-Baugruppe (4) auch zwei nebeneinander angeordnete Vorderräder (4) aufweist, die jeweils eine Struktur mit der gleichen Form wie die Hinterräder (30) haben.

16. Fahrzeug nach Anspruch 1, **dadurch gekennzeichnet, dass** sich der Rahmen außen an den zwei Hinterrädern oder innen zwischen ihnen erstreckt.

17. Fahrzeug nach Anspruch 1, **dadurch gekennzeichnet, dass** es ein elektrisches Antriebssystem mit einem Elektromotor (M) mit Gleichstrom oder Wechselstrom, der von dem Rahmen (2) zwischen den zwei Hinterrädern getragen wird, und mit einer Kurbelwelle aufweist, die gegenüberliegende Enden aufweist, die symmetrisch von dem Motor vorstehen und mit den zwei Hinterrädern (30) verbunden sind.

18. Fahrzeug nach Anspruch 1, **dadurch gekennzeichnet, dass** es einen Elektromotor und einen Akku (B) umfasst, der einen im Wesentlichen flachen Kasten (S) mit einer Höhe von weniger als 5 cm und einer Breite von weniger als 12 cm aufweist, entlang der gesamten Länge eines Bodenabschnitts (P) des Fahrzeugs angeordnet, starr mit dem Rahmen verbunden und so ausgeführt ist, dass er ausgetauscht werden kann.

19. Fahrzeug nach Anspruch 1, **dadurch gekennzeichnet, dass** es ein elektrisches oder elektrisch unterstütztes pedalbetriebenes Antriebssystem mit einem Elektromotor, der einen zwischen den zwei Pedalen angeordneten Stator aufweist, und mit einer Kurbelwelle, die direkt symmetrisch mit den zwei Pedalen verbunden ist, sowie vorzugsweise mit einer elektromechanischen Verbindung für die auskuppelbare Kopplung zwischen Pedalen und Kurbelwelle aufweist.

20. Fahrzeug nach Anspruch 1, **dadurch gekennzeichnet, dass** es mit einem hinteren Gepäckträger (C2), der den Raum zwischen den zwei Hinterrädern (30) nutzt, um das nutzbare Volumen zu maximieren und gleichzeitig den Schwerpunkt niedrig zu halten, und/oder mit einem vorderen Gepäckträger (C1) versehen ist.

21. Fahrzeug nach Anspruch 20, **dadurch gekennzeichnet, dass** der vordere Gepäckträger (C1) und/oder der hintere Gepäckträger (C2) an ihrer Außenfläche verteilte Solarmodule tragen.

22. Fahrzeug nach Anspruch 1, **dadurch gekennzeichnet, dass** jedes Hinterrad (30) eine Vielzahl elastisch verformbarer radialer Abschnitte (305) umfasst, die die Radnabe (301) mit dem Umfangsrandabschnitt (306) für Kontakt mit dem Boden verbinden, wobei die elastisch verformbaren radialen Abschnitte durch eine Vielzahl von Ausschnitten (311) gebildet werden, die in einer einzelnen Radscheibe (303) ausgebildet sind, wobei die Radscheibe so geformt ist, dass jeder radiale Abschnitt (305) eine gewellte Form hat und ein Teil davon, der näher an dem Umfang des Rades liegt, zu einer Seite des Rades hin konkav ist und ein Teil davon, der näher an der Nabe des Rades liegt, zu der gegenüberliegenden Seite des Rades hin konkav ist.

23. Fahrzeug nach Anspruch 1, **dadurch gekennzeichnet, dass** die elastisch verformbaren radialen Abschnitte (305) durch wenigstens ein Band (W), beispielsweise aus hochfestem Stahl oder einem Verbundmaterial, gebildet werden, das so geformt ist, dass es eine Vielzahl radialer Ausbuchtungen (305) bildet, die jeweils zwei einander gegenüberliegende Wände (350) umfassen, die in Ebenen parallel zu der Achse des Rades eingeschlossen sind, in radialer Richtung nach außen auseinanderlaufen und an dem Umfang des Rades über einen gekrümmten Abschnitt (351) des Bandes (W) miteinander verbunden sind.

24. Fahrzeug nach Anspruch 1, **dadurch gekennzeichnet, dass** es mit einem Ständer (360) versehen ist, der so ausgeführt ist, dass er die Vorderrad-Baugruppe (4) von dem Boden beabstandet hält, dass die Vorderrad-Baugruppe (4) so geformt ist, dass sie als Windrotor wirken kann, und dass die Vorderrad-Baugruppe (4) eine Nabe aufweist, die mit einem Stromerzeuger verbunden ist, der zum Laden einer Batterie verwendet werden kann, mit der das Fahrzeug ausgestattet ist.

25. Fahrzeug nach Anspruch 1, **dadurch gekennzeichnet, dass** es mit einer elektronischen miniaturisierten Multisensorplattform versehen ist, die eine oder mehrere Komponente/n umfasst, die ausgewählt wird/werden aus:
- einer oder mehreren Mikro-Kamera/s,
- einer Trägheitsplattform,
- einem oder mehreren Beschleunigungsmesser/n, der/die auch als Neigungsmesser verwendet werden kann/können,
- Sensor-Arrays für gerichtete Spracherkennung,
- seitlichen, vorderen und hinteren Näherungssensoren,
- einem Prozessor,
- einem System für Internetverbindung,
- einem drahtlosen und/oder drahtgebundenen System zum Verbinden mit einem Smartphone und mit dem Antriebsstrang des Aufsitzfahrzeugs,
wobei die Plattform so ausgeführt ist, dass sie auf eine oder mehrere der folgenden Art/en verwendet werden kann:
a) als ein Diebstahlsicherungssystem, das so ausgeführt ist, dass es die Benutzung des Fahrzeugs unterbindet und/oder die Funktionen einer elektronischen Steuerungseinrichtung des Fahrzeugs deaktiviert, wobei die Diebstahlsicherungsvorrichtung mittels eines Sprach- und/oder Gesichtserkennungssystems entriegelt werden kann und so ausgeführt ist, dass sie das Bild eines Fremden, der versucht, das Fahrzeug zu benutzen, zu einer proprietären digitalen Vorrichtung sendet, die entscheidet, ob die Benutzung des Fahrzeugs genehmigt wird oder nicht;
b) als ein System zur Verbindung zwischen Fahrzeugen oder zwischen Fahrzeug und Infrastruktur, oder ganz allgemein als System zur Verbindung eines Fahrzeugs mit einer anderen kommunizierenden Vorrichtung,
c) als ein System zum Steuern von Bremsunterstützung basierend auf dem Einsatz von einer oder zwei Kamera/s, die so ausgeführt ist/sind, dass sie ein Hindernis auf der Straße, ein Loch in der Straße oder ganz allgemein eine gefährliche Situation erkennt/erkennen, wobei das System so ausgeführt ist, dass es das Gefahrenerkennungs-Signal in einem integrierten Prozessor verarbeitet und das verarbeitete Signal dann zu dem Motorsteuerungs-System oder direkt zu dem Brems-System des Fahrzeugs sendet;
d) zum Verbinden einer Kamera, die die Fahrzeugumgebung abbildet, und eines Internet-Ortungssystems, um dem Fahrer des Fahrzeugs Informationen über den Ort oder die Gebäude an der befahrenen Straße bereitzustellen;
e) als ein System zum Messen der Neigung des Fahrzeugs bei starkem Bremsen oder auf eisglatten Straßen, das in der Lage ist, eine kombinierte Funktion der zwei Hinterräder und des Vorderrades auszulösen, um der Kraft entgegenzuwirken, durch die das Fahrzeug zum Umkippen gebracht wird;
f) als System zum Optimieren von Energierückgewinnung beim Abbremsen oder Freigeben des Beschleunigungssystems mittels bei vierrädrigen Fahrzeugen bekannter Verfahren;
g) als eine Einrichtung zum Herstellen von Verbindung zwischen einem Smartphone und dem Steuerungssystem des Antriebsstrangs des Fahrzeugs, insbesondere zum Aufladen mit Hilfe eines externen Ladegerätes; zum Verwalten des Akkus; zum Verwalten entweder tragbarer oder in Fahrzeugoberflächen integrierter Solarmodule;
h) zum Steuern von Näherungssensoren, die den Fahrer sowohl akustisch als auch auf dem Bildschirm des Smartphones warnen, wenn sich ein anderes Fahrzeug entweder von der Seite oder von hinten bis auf einen kritischen Abstand nähert.

26. Fahrzeug nach Anspruch 1, **dadurch gekennzeichnet, dass** wenigstens die Räder der Hinterrad-Baugruppe wenigstens an ihrem Umfangsabschnitt eine Beschichtung einer Dicke im Nanometer-Bereich mit schmutz- und wasserabweisenden Eigenschaften aufweisen, so dass die Verwendung von Schutzverkleidungen nicht erforderlich ist.

## Revendications

1. Véhicule porteur, comprenant un châssis (2), un ensemble de roues arrière (3) supporté par le châssis (2) et un ensemble de roues avant (4) supporté par un ensemble de direction (5) associé au châssis (2),
dans lequel :
- l'ensemble de roues arrière (3) comporte deux roues arrière disposées côte à côte (30) ayant des diamètres essentiellement égaux et des moyeux respectifs (301) couplés en rotation ensemble,
- chaque roue arrière (30) comprend une partie circonférentielle périphérique (306) pour le contact avec le sol, reliée à un moyeu de roue central (301) au moyen d'un ou de plusieurs élément(s) élastique(s) ondulé(s) (305) configuré(s) de manière à se déformer élastiquement dans une direction radiale, lors de l'utilisation du véhicule, au niveau de la partie de la roue (303) comprise entre le moyeu de roue et la partie de la roue qui est en contact avec le sol, de manière à permettre une inclinaison latérale du véhicule dans un virage,
- les deux roues arrière (30) sont axialement espacées l'une de l'autre d'une longueur qui est comprise entre 0,2 et 0,95 fois leur diamètre, de préférence entre 0,3 et 0,4 fois leur diamètre, de manière à ce que le véhicule ait une position verticale stable, grâce à l'appui sur les deux roues arrière (30) et l'ensemble de roues avant (4), alors qu'au même moment, les deux roues arrière (30) sont suffisamment proches pour que la différence de leurs vitesses périphériques dans un virage soit suffisamment faible pour être compensée par les différentes déformations élastiques des éléments élastiques ondulés (305) des deux roues arrière (30).

2. Véhicule selon la revendication 1, **caractérisé en ce que** l'arbre (302) dudit ensemble de roues arrière (3) porte un ou plusieurs pignon(s) (310) engagé(s) sélectivement avec une chaîne de transmission (10) du véhicule, et **en ce que** ledit ou lesdits plusieurs pignon(s) (310) et la chaîne (10) associée à ceux-ci sont agencés entre les deux roues arrière (30).

3. Véhicule selon la revendication 1, **caractérisé en ce que** les moyeux (301) des roues arrière (30) sont reliés rigidement à un arbre de roue commun (302).

4. Véhicule selon la revendication 2, **caractérisé en ce que** ledit châssis (2) supporte en rotation un ensemble pédalier comportant une ou plusieurs roue(s) dentée(s) pour s'engager avec la chaîne de transmission de véhicule (10), qui est/sont essentiellement centrée(s) sur le plan médian longitudinal du véhicule et essentiellement alignée(s) avec ledit ou lesdits plusieurs pignon(s) (310) agencé(s) entre les roues arrière (30).

5. Véhicule selon la revendication 1, **caractérisé en ce que** chaque roue arrière (30) comprend un disque de roue (303), qui relie le moyeu de roue (301) à ladite partie circonférentielle périphérique (306) pour le contact avec le sol, et en **en ce que** le disque de roue (303) de chaque roue arrière (30) comprend une ou plusieurs partie(s) circonférentielle(s) concentrique(s) (305) ayant chacune une configuration ondulée, de manière à constituer ledit ou lesdits plusieurs élément(s) élastique(s) configuré(s) de manière à se déformer élastiquement dans la direction radiale, lors de l'utilisation du véhicule, au niveau de la partie du disque de roue (303) comprise entre le moyeu de roue (301) et la partie de la roue qui est en contact avec le sol, de manière à permettre une inclinaison latérale du véhicule dans un virage.

6. Véhicule selon la revendication 5, **caractérisé en ce que** le disque de roue (303) de chaque roue arrière (30) est formé d'un matériau hautement élastique choisi parmi l'acier à haute résistance, en particulier l'acier à deux phases avec une valeur de 1500 DP ou plus, et un matériau composite comportant une matrice de résine synthétique renforcée par des fibres.

7. Véhicule selon la revendication 6, **caractérisé en ce que** le disque de roue (303) de chaque roue arrière (30) est formé d'une paroi multicouche comportant une pluralité de couches réalisées chacune en acier à haute résistance ou en matériau composite.

8. Véhicule selon la revendication 5, **caractérisé en ce que** le disque de roue (303) de chaque roue arrière (30) comprend une seule paroi comportant les parties ondulées (305) susmentionnées.

9. Véhicule selon la revendication 1, **caractérisé en ce que** le disque élastiquement déformable (303) de chaque roue arrière (30) a une épaisseur radialement variable et/ou des parties ondulées ayant une section transversale de profil ondulé avec une fréquence et/ou une amplitude des ondulations radialement variable(s).

10. Véhicule selon la revendication 5, **caractérisé en ce que** le disque de roue (303) de chaque roue arrière (30) est pourvu d'un dispositif (308 ; 309) pour régler la configuration et/ou la flexibilité desdites parties ondulées (305) du disque de roue (303).

11. Véhicule selon la revendication 10, **caractérisé en ce que** ledit dispositif de réglage comprend une ou plusieurs bague(s) en matériau élastomère (308) applicable(s) sur une face ou sur les deux faces d'une ou de plusieurs desdites parties circonférentielles ondulées (305) du disque de roue (303), chaque bague en matériau élastomère (308) comportant une ou plusieurs nervure(s) circonférentielle(s) configurée(s) pour être reçue(s) dans des évidements annulaires respectifs définis par lesdites parties ondulées (305).

12. Véhicule selon la revendication 10, **caractérisé en ce que** ledit dispositif de réglage comprend un ou plusieurs fil(s) de longueur réglable enroulés chacun autour d'une partie ondulée respective (305) dudit disque de roue (30).

13. Véhicule selon la revendication 12, **caractérisé en ce que** lesdits fils de longueur réglable (309) sont des fils flexibles enroulés en bague et ayant des extrémités couplées ensemble dans une position relative réglable manuellement ou au moyen d'un actionneur, ou sont des fils ayant au moins une partie constituée d'un alliage métallique à mémoire de forme, commandée électriquement, agissant comme un actionneur.

14. Véhicule selon la revendication 1, **caractérisé en ce que** la partie circonférentielle périphérique de chaque roue arrière comprend un pneu rempli de matière plastique expansée, ledit pneu étant de préférence revêtu intérieurement d'un fluide lubrifiant, pour faciliter le remplissage de la matière plastique expansée.

15. Véhicule selon la revendication 1, **caractérisé en ce que** l'ensemble de roues avant (4) a également deux roues avant disposées côte à côte (4) ayant chacune une structure de la même configuration que les roues arrière (30).

16. Véhicule selon la revendication 1, **caractérisé en ce que** le châssis s'étend extérieurement aux deux roues arrière ou intérieurement entre elles.

17. Véhicule selon la revendication 1, **caractérisé en ce qu'**il a un système de propulsion électrique, avec un moteur électrique (M) à courant continu ou à courant alternatif, supporté par le châssis (2) entre les deux roues arrière, et avec un vilebrequin ayant des extrémités opposées faisant saillie à partir du moteur et reliées aux deux roues arrière (30), symétriquement.

18. Véhicule selon la revendication 1, **caractérisé en ce qu'**il comprend un moteur électrique et un bloc-batterie (B) ayant un boîtier essentiellement plat (S), d'une hauteur inférieure à 5 cm et d'une largeur inférieure à 12 cm, agencé sur toute la longueur d'une partie de plancher (P) du véhicule, relié rigidement au châssis et configuré de manière à être remplaçable.

19. Véhicule selon la revendication 1, **caractérisé en ce qu'**il a un système de propulsion à pédales électrique ou à assistance électrique, avec un moteur électrique ayant un stator positionné entre les deux pédales et avec un vilebrequin directement relié symétriquement aux deux pédales et de préférence avec une articulation électromécanique pour le couplage pouvant être désengagé entre les pédales et le vilebrequin.

20. Véhicule selon la revendication 1, **caractérisé en ce qu'**il est pourvu d'un porte-bagages arrière (C2), qui exploite l'espace entre les deux roues arrière (30) pour maximiser le volume utile, tout en maintenant le centre de gravité bas, et/ou d'un porte-bagages avant (C1).

21. Véhicule selon la revendication 20, **caractérisé en ce que** ledit porte-bagages avant (C1) et/ou ledit porte-bagages arrière (C2) porte/portent une distribution de panneaux photovoltaïques sur leur surface externe.

22. Véhicule selon la revendication 1, **caractérisé en ce que** chaque roue arrière (30) comprend une pluralité de parties radiales élastiquement déformables (305) qui relient le moyeu de roue (301) à ladite partie circonférentielle périphérique (306) pour le contact avec le sol, lesdites parties radiales élastiquement déformables étant définies par une pluralité d'encoches (311) formées dans un seul disque de roue (303), ledit disque de roue étant façonné de manière à ce que chaque partie radiale (305) ait une conformation ondulée, avec une partie de celle-ci plus proche de la périphérie de la roue concave vers un côté de la roue, et une partie de celle-ci plus proche du moyeu de la roue concave vers le côté opposé de la roue.

23. Véhicule selon la revendication 1, **caractérisé en ce que** lesdites parties radiales élastiquement déformables (305) sont définies par au moins une bande (W), par exemple en acier à haute résistance ou en matériau composite, façonnée de manière à définir une pluralité de lobes radiaux (305), comprenant chacun deux parois se faisant face (350), contenues dans des plans parallèles à l'axe de la roue, divergeant dans une direction radiale vers l'extérieur et reliées l'une à l'autre à la périphérie de la roue par une partie incurvée (351) de ladite bande (W).

24. Véhicule selon la revendication 1, **caractérisé en ce qu'**il est pourvu d'un support (360) configuré pour maintenir l'ensemble de roues avant (4) espacé du sol, **en ce que** ledit ensemble de roues avant (4) est façonné de manière à pouvoir agir comme un rotor d'éolienne, et **en ce que** ledit ensemble de roues avant (4) a un moyeu relié à un générateur électrique, pouvant être utilisé pour charger une batterie dont le véhicule est pourvu.

25. Véhicule selon la revendication 1, **caractérisé en ce qu'**il est pourvu d'une plateforme électronique multisensorielle miniaturisée, comprenant un ou plusieurs composant(s) choisi(s) parmi :
- une ou plusieurs micro-caméra(s),
- une plateforme inertielle,
- un ou plusieurs accéléromètre(s) qui peut/peuvent également être utilisé(s) comme inclinomètre(s),
- des réseaux de capteurs pour la reconnaissance vocale directionnelle,
- des capteurs de proximité latéraux, avant et arrière,
- un processeur,
- un système pour la connectivité Internet,
- un système sans fil et/ou filaire pour établir une interface avec un téléphone intelligent et avec le groupe motopropulseur du véhicule porteur,
ladite plate-forme étant configurée pour être utilisée d'une ou de plusieurs manière(s) des manières suivantes :
a) en tant que système antivol configuré pour empêcher l'utilisation du véhicule et/ou désactiver les fonctions d'un dispositif de commande électronique du véhicule, ledit dispositif antivol étant déverrouillable au moyen d'un système de reconnaissance vocale et/ou faciale et étant configuré pour envoyer l'image d'un inconnu qui tente d'utiliser le véhicule à un dispositif numérique de propriétaire qui décide d'autoriser ou non l'utilisation du véhicule ;
b) en tant que système de connexion véhicule-véhicule ou véhicule-infrastructure ou, plus généralement, en tant que système de connexion d'un véhicule à un autre dispositif pourvu de communication ;
c) en tant que système de commande de freinage assisté, sur la base de l'utilisation d'une ou de deux caméra(s) configurée(s) pour reconnaître un obstacle sur la route, un trou sur la route, ou plus généralement une situation dangereuse, le système étant configuré pour traiter le signal de reconnaissance de danger dans un processeur embarqué et envoyer ensuite le signal traité au système de commande de moteur ou directement au système de freinage du véhicule ;
d) pour établir une interface entre une caméra qui cadre la scène entourant le véhicule et un système de suivi en ligne afin de fournir au conducteur du véhicule des informations sur l'endroit ou les bâtiments sur la route parcourue ;
e) en tant que système de mesure de l'inclinaison du véhicule en cas de freinage brusque ou sur des routes verglacées glissantes, capable de déclencher une action combinée entre les deux roues arrière et la roue avant afin de contrecarrer la force qui tend à renverser le véhicule ;
f) en tant que système d'optimisation de la récupération d'énergie en cas de freinage ou de relâchement du système d'accélération, selon des procédés connus dans les véhicules à quatre roues ;
g) en tant que moyen d'interface entre un téléphone intelligent et le système de commande du groupe motopropulseur du véhicule, notamment pour la charge, au moyen d'un chargeur externe ; pour la gestion du bloc-batterie ; pour la gestion soit des panneaux photovoltaïques portables, soit de ceux intégrés dans les surfaces de véhicule ;
h) pour commander des capteurs de proximité qui avertissent le conducteur à la fois acoustiquement et sur l'écran de téléphone intelligent lorsqu'un autre véhicule s'approche à une distance critique, soit latéralement, soit par l'arrière.

26. Véhicule selon la revendication 1, **caractérisé en ce qu'**au moins les roues de l'ensemble de roues arrière ont - au moins sur leur partie périphérique - un revêtement d'épaisseur nanométrique avec des propriétés anti-salissures et hydrofuges, de manière à ne pas nécessiter l'utilisation d'enveloppes de protection.
